# EUROPÄISCHE PATENTSCHRIFT

(11) **EP 0 391 026 B1**
(45) Veröffentlichungstag und Bekanntmachung des Hinweises auf die Patenterteilung: **08.09.1993**
(21) Anmeldenummer: 90101256.7
(22) Anmeldetag: 23.01.1990
(51) Int. Cl.: F16L 27/10, F01N 7/08, F01N 7/18

(54) **Vorrichtung zur Entkopplung zweier Rohrteile**
Device for decoupling two pipe parts
Dispositif pour désaccoupler deux éléments de tuyau

(30) Priorität: 06.04.1989 DE 3911114
(43) Veröffentlichungstag der Anmeldung: 10.10.1990
(73) Patentinhaber: IWK Regler und Kompensatoren GmbH, D-76288 Stutensee-Blankenloch (DE)
(72) Erfinder: Holzhausen, Wieland, Dr., Dipl.-Ing., D-8361 Auerbach (DE); Kunzmann, Thomas, Dipl.-Ing., D-7519 Walzbachtal (DE); Pontzen, Marc, Dipl.-Ing., D-6715 Lambsheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 208 128
- DE-U- 8 521 900
- GB-A- 2 125 502
- US-A- 2 712 456

## Beschreibung

Die Erfindung betrifft eine Vorrichtung zur schwingungstechnischen Entkopplung zweier Rohrteile, insbesondere einer gasdichten Metallbalgentkopplung zwischen einem Abgasrohr eines Kraftfahrzeugmotors und der Abgasanlage, mit mindestens einem aus Drahtgeflecht, -gestricke, -wirrlage oder dergleichen verpreßten Dämpferkissen.

Derartige Vorrichtung sind aus der DE-A- 33 21 382, der DE-A-36 22 481 und der EP-A- 208 128 bekannt. Die Vorrichtungen weisen ein gutes Dämpfungsverhalten in bevorzugten Richtungen auf, während das Dämpfungsverhalten in anderen Richtungen wesentlich, teilweise um Größenordnungen schlechter ist. So kann beispielsweise das Dämpferkissen der EP-A- 208 128 keinerlei Torsionsbewegungen abdämpfen, die vollständig auf den Balg durchschlagen. Letzteres wird zwar mit der Ausgestaltung der DE-A- 36 22 481 vermieden, indem dort eine Entkopplung von Torsionsbewegungen vorgenommen wird; eine Dämpfung ist hier aber demgemäß gerade nicht vorgesehen.

Die Druckschrift GB-A-21 25 502 zeigt sämtlich Dämpferkissen mit keilsymmetrischen Rund- bzw. Schnittflächen, die als solche keine an dem Dämpferkissen in Richtung dieser Flächen tangential angreifenden Kräfte aufnehmen und dämpfen können.

Auf der US-A-2 712 456 ist eine Verbindungsleitung mit entfernbarem Balg bekannt. Die Vorrichtung weist einen reibungsvermindernden Ring, der aus Gußeisen mit einem hohen Anteil an Kohlenstoff und einem Nickelanteil von 20 % besteht, mit entsprechend hohen Schmier- und Korrosionswiderstandseigenschaften auf.

Die EP-A-208 128 zeigt eine gelenkige Verbindung von Rohrteilen, insbesondere bei Abgasleitungen für Kraftfahrzeuge, die eine Abgasleitung jeweils konzentrisch ringförmig umgebende Polster aufweist. Auch diese können tangential an ihrem Umfang angreifende Kräfte nicht aufnehmen, sondern dienen lediglich zur Aufnahme und Dämpfung axial wirkender Kräfte. Gleiches gilt für eine aus der DE-U-85 21 900 bekannte Verbindungseinrichtung für zwei Rohre einer Leitung für heiße Medien, die ebenfalls konzentrisch von Dichtkissen umgeben ist, welche damit einen ringförmigen Grundriß bzw. eine entsprechende Schnittebene haben.

Der Erfindung liegt daher die Aufgabe zugrunde, eine Vorrichtung der gattungsgemäßen Art dahingehend weiterzuentwickeln, daß eine optimale Dämpfung in sämtlichen, bei einer derartigen Vorrichtung auftretenden, Bewegungsrichtungen erzielt wird.

Erfindungsgemäß wird die genannte Aufgabe bei einer Vorrichtung zur schwingungstechnischen Entkopplung zweier Rohrteile, insbesondere zwischen einem Abgasrohr eines Kraftfahrzeugmotors und der Abgasanlage, mit mindestens einem aus Drahtgeflecht, -gestricke, -wirrlage oder dergleichen verpreßten Dämpferkissen dadurch gelöst, daß das Dämpferkissen mit mehreckiger Außen- und Innenkontur ausgebildet ist.

Die Angabe "mehreckig" beinhaltet bei einem derartigen räumlichen Dämpferkissen, daß Ecken vorhanden sind, in denen mindestens drei scharfe Kanten jeweils zusammenlaufen Die Mehreckigkeit grenzt den Anmeldungsgegenstand ab gegenüber zylinder-, zylindermantelförmigen, kegelstumpfförmigen, kegelstumpfmantelförmigen Dämpferkissen, die zwar als Übergang von ihren Mantelflächen zu ihren Grundflächen Kanten, aber keine Ecken im vorgenannten Sinne aufweisen. Insbesondere sind ihre Mantelflächen stetig ausgebildet und weisen keine Kanten auf, die durch die -vorausgesetzte mehreckige Ausbildung der Dämpferkissen des Anmeldungsgegenstandes bei diesen vorhanden sind. Die erfindungsgemäßen Dämpferkissen weisen daher neben ihren Kanten zwischen Mantelflächen und Grundflächen auch Kanten zwischen einzelnen Mantelflächenbereichen auf. Während die genannten bekannten Dämpferkissen mit kreisförmiger Grundfläche tangential an ihrem Mantel angreifende Umfangskräfte in keiner Weise aufnehmen können, wird dies bei der erfindungsgemäßen Ausgestaltung der Dämpferkissen durch die Ausbildung von Kanten im Mantel ermöglicht, so daß die Gehäuseteile im Mantelbereich sich nicht mehr frei verdrehen können, wie dies beim Stand der Technik der Fall ist, sondern hieran durch die Kanten im Mantel gehindert werden. Die erfindungsgemäß ausgestalteten Dämpferkissen weisen in der Regel eine mehrzählige, aber nicht unendlich zählige Drehsymmetrieachse senkrecht zu ihren Grundflächen auf. Da mit einer Vielzahl von Kanten im Mantel bzw. Ecken in der Grundfläche, die an diesen ausgeübten Widerstandskräfte gegen entsprechende Bewegungen reduziert werden, ist vorzugsweise vorgesehen, daß das Dämpferkissen eine zwei- bis sechseckige Grundebene aufweist, wobei das Dämpferkissen eine viereckige Grundebene aufweist. Wenn in letzterem Falle eine Vierzähligkeit der gegebenenfalls vorhandenen Symmetrieachse vorhanden sein kann, so kann in gleicher Weise auch Zweizähligkeit gegeben sein, indem beispielsweise die Grundfläche des Dämpferkissens nicht quadratisch, sondern beispielsweise rautenförmig ausgebildet ist. Weitere bevorzugte Ausgestaltungen sehen vor, daß das Dämpferkissen grundsätzlich quaderförmige Außenkontur, bzw. daß das Dämpferkissen pyramidenstumpfartige Außenkontur aufweist. Dabei müssen die Stirnseiten der Dämpferkissen nicht eine Ebene bilden, sondern es kann zum Beispiel vorgesehen sein, daß diagonal gegenüberliegende Ecken der Stirnseiten mit den Mantelflächen zwar jeweils in einer Ebene liegen, zueinander aber in Richtung der Achse des Dämpferkissens selbst zueinander versetzt sind.

Die die Dämpferkissen aufnehmenden Gehäuse sind grundsätzlich an die erläuterte Grundform des jeweiligen Dämpferkissens angepaßt. In bevorzugter Ausgestaltung ist vorgesehen, daß ein die Dämpferkissen aufnehmendes Gehäuse durch eine an die Außenkontur des Dämpferkissens angepaßte, mit einem Rohrende verbundene Dämpferaußenfassung und durch eine an die Innenkontur des Dämpferkissens angepaßte, mit dem anderen Rohrende verbundene Dämpferinnenfassung gebildet ist. Weitere Ausgestaltungen sehen vor, daß Dämpferaußen- und -innenfassung schalenartig ausgebildet sind, wobei darüberhinaus einerseits vorgesehen sein kann, daß die Dämpferkissen mit ihren äußeren Seitenkanten parallel zur Symmetrieachse der Rohrenden in unbelastetem Zustand angeordnet sind oder aber, daß die Dämpferkissen mit zur Achse A der Rohrenden Paralleler Diagonale der äußeren Seitenkanten ausgerichtet sind.

Die Gehäuse gewährleisten neben ihrer Funktion der Kraftaufnahme und -übertragung noch einen Schutz der Dämpferkissen und insbesondere auch des Balgs gegen Steinschlag und Spritzwasser sowie einen Schall-Abstrahlungsschutz, so daß eine zusätzliche Abschützung entfallen kann. Weiterhin können sie als angulare Überlastungssicherung ausgebildet sein, wobei die maximale Auswinkelung vorzugsweise auf 5 bis 10° begrenzt wird.

Während bisherige Entkopplungsvorrichtungen je nach ihrer Ausgestaltung nur bei vertikaler oder horizontaler Einbaulage eine optimale Dämpfung ergaben, wird durch die erfindungsgemäße Ausgestaltung eine Entkopplungseinrichtung geschaffen, die unabhängig von der Einbaulage eine optimale Dämpfung sämtlicher auftretender Bewegungen gewährleistet und eine gleichmäßige Dämpfung über alle Freiheitsgrade sicherstellt. Insbesondere wird eine Fixierung gegen am Mantel des Dämpferkissens angreifenden Torsionskräften und eine Dämpfung derselben ermöglicht, wodurch eine Dämpfung gegen angulare Bewegungen um die Symmetrieachse der Dämpferkissen erreicht wird. Während vorzugsweise zwei Dämpferkissen diagonal zur Hauptachse der Vorrichtung und damit der Rohrenden vorgesehen sind, können diese auch Hauptrohrachse versetzt sein, so daß sie einen Winkel von weniger als 180 Grad einschließen.

Das bevorzugte Raumgewicht der Dämpferkissen liegt zwischen 1,4 und 1,8 kg/dm³. Die bevorzugte Kissenhöhe liegt zwischen 5 und 15 mm bei einem Rohrdurchmesser von 50 mm. Bei anderen Rohrdurchmessern soll die Kissenhöhe vorzugsweise im entsprechenden Verhältnis zu diesen stehen. Das bevorzugte Verhältnis zwischen Kissenstärke a und -höhe 1 liegt zwischen 2:1 und 4:1.

Weitere Vorteile und Merkmale der Erfindung ergeben sich aus den Ansprüchen und aus der nachfolgenden Beschreibung, Ausführungsbeispiele der Erfindung unter Bezugnahme auf die Zeichnung im einzelnen erläutert sind. Dabei zeigt bzw. zeigen:
- Figur 1: Eine detaillierte Seitenansicht einer ersten Ausführungsform der erfindungsgemäßen Vorrichtung;
- Figur 1a: einen Schnitt durch eine Ausgestaltung mit tonnenförmigem Balg;
- Figur 1b: eine Sicht entsprechend dem Pfeil Ib auf die Ausgestaltung der Fig. 1a;
- Figur 2: eine schematische Darstellung eines axialen Schnittes des Gegenstands der Fig.1;
- Figur 3: eine schematische Darstellung eines senkrechten Schnittes des Gegenstands der Fig.1;
- Figur 4: eine schematische Darstellung einer Aufsicht entsprechend dem Pfeil IV-IV der Fig.1 (rechte Seite) sowie bei weggebrochener Dämpferaußenfassung die Darstellung der Dämpferinnenfassung (linke Seite);
- Figur 5: eine schematische Darstellung ähnlich der der Fig.2 bei einer anderen Ausführungsform der erfindungsgemäßen Vorrichtung;
- Figur 6: ein achssenkrechter Schnitt ähnlich dem der Fig.3 bei der Ausgestaltung der Fig.5;
- Figur 7: eine Aufsicht entsprechend VII auf den Gegenstand der Fig.5;
- Figur 8: eine Sicht in Achsrichtung auf eine weitere Ausgestaltung der erfindungsgemäßen Vorrichtung;
- Figur 9: eine Aufsicht entsprechend der Sicht der Fig. 1 auf eine schematische Darstellung einer Hälfte der (hinsichtlich der anderen Hälfte symmetrischen) Ausgestaltung der Fig.8;
- Figur 10: eine Sicht entsprechend X auf den Gegenstand der Fig.8.
- Figuren 11 - 13: ein benachbartes Dämpferkissen in zwei Seitenansichten und in Aufsicht; und
- Figuren 14 und 15: ein Dämpferkissen mit quadratischen Grundflächen in Seitenansicht (Fig.14, teilweise geschnitten) und Aufsicht (Fig.15).

Die erfindungsgemäße Vorrichtung zur schwingungstechnischen Entkopplung zweier Rohrteile weist zwei Rohrenden 2, 3 im dargestellten Ausführungsbeispiel an Rohrstutzen 4,6 auf, die über einen sie umgebenden Balg 7 flexibel miteinander verbunden sind. Auf dem Rohrstutzen 4 sitzt konzentrisch und fest mit diesem verbunden (wie durch Schweißen) ein - Dämpfungsübertragungskörper 8 auf, der in seinem Befestigungsbereich 9 mit dem Rohrstutzen 4 ring- oder hülsenförmig ausgebildet ist, von dem sich eine pyramidenförmige Dämpferinnenfassung 11 für ein Dämpferkissen 12 erstreckt, das ein Innen- oder Unterteil einer Einfassung für das Dämpferkissen 12 bildet. Das Außen- oder Oberteil des Dämpferkissens 12 wird durch eine entsprechend geformte, eine pyramidenstumpfförmige Dämpferaußenfassung 13 gebildet, die an einem äußeren Dämpferübertragungskörper 14 ausgebildet ist, der ebenfalls einen Hülsen- oder Ringabschnitt 16 aufweist, mit dem er auf dem Ende 3 des anderen Rohrstutzens 6 aufsitzt. Zwischen Dämpferinnen- und Dämpferaußenfassung 11, 13 sitzt das grundsätzlich pyramidenstumpfmantelförmige Dämpferkissen 12 und liegt mit seinen äußeren und inneren Seitenwandungen 17, 18 an der Dämpferaußen bzw. Innenfassung 13, 11 an, während es an seinen oberen und unteren Stirnseiten 21, 22 durch Abbiegungen 23,24 der Dämpferinnen- bzw. Außenfassung 11,13 gehalten wird. Im dargestellten Ausführungsbeispiel sitzt das Dämpferkissen 12 relativ zur Achse A der Rohrstutzen 4,6 (bei unbelastetem Zustand) derart, daß die Diagonale seiner Grundfläche ebenso wie seine Drehsymmetrieachse senkrecht zur Rohrachse A steht. Die Dämpferinnenfassung 11 ist mit ihren Tragflächenbereichen für das Dämpferkissen 12 auf der dem Befestigungsbereich 9 zugewandten Seite relativ zur achssenkrechten Mittelebene M der Anordnung einstückig mit dem Befestigungsbereich 9 ausgebildet, während die jenseits der Mittelachse M liegenden Tragteile der Dämpferinnenfassung 11 als separates Teil ausgebildet und mit dem vorgenannten Teil durch Schweißen (bei 26) verbunden sind. Vorzugsweise kann sie auch mit dem Rohrende 2 einstückig ausgebildet sein, wodurch in wirtschaftlicher Weise die Teilzahl weiter reduziert wird. Statt Schweißverbindungen können auch Druckfügungen vorgesehen sein.

Ähnliches gilt für die Dämpferaußenfassung 13. Auch hier sind die zwischen Ringabschnitt 16 und achssenkrechter Mittelebene M ausgebildeten Teile des äußeren Dämpferübertragungskörpers 14 einstückig ausgebildet, während die jenseits der Mittelebene M befindlichen Tragteile im Bereich der Mittelebene M (bei 27) angeschweißt sind.

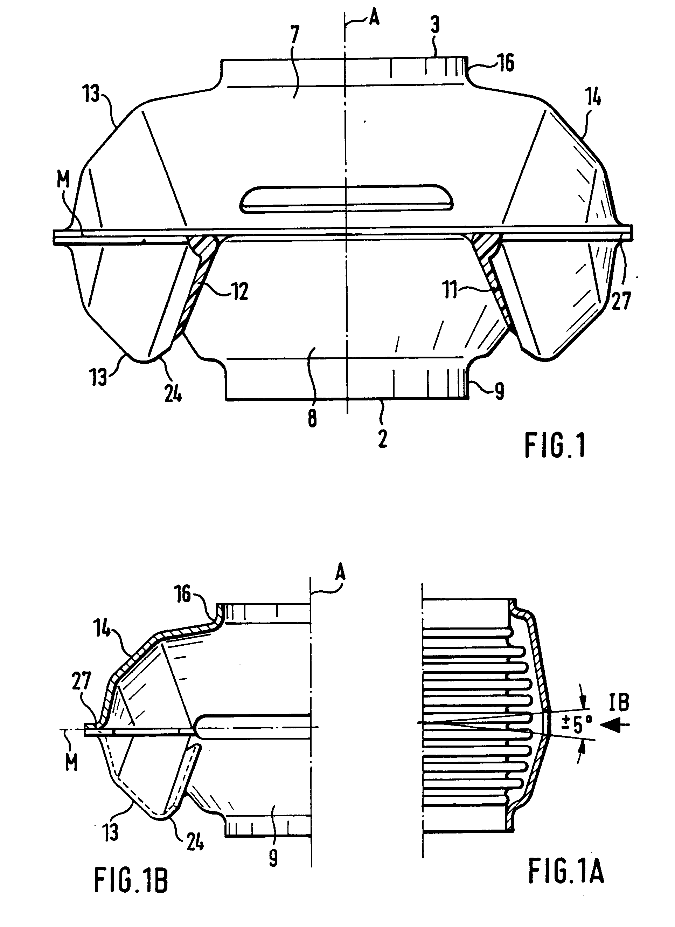

Durch die erfindungsgemäße Ausgestaltung wird eine Vorrichtung geschaffen, die eine weitgehend gleiche Schwingungsdämpfung in allen Richtungen bzw. gegenüber sämtlichen auftretenden Bewegungen ermöglicht und keine herausgehobenen Richtungen aufweist, die keine Dämpfung ermöglichen, wie dies beim Stand der Technik der Fall ist. Insbesondere werden auch angulare Bewegungen der Rohrstutzen 4,6 um die achssenkrechte Symmetrieachse der Dämpferkissen 12 aufgrund der mehreckigen oder mehrkantigen Ausgestaltung der Dämpferkissen 12 dämpfend aufgenommen. Gleiches gilt, wie aus der Fig.1 entnehmbar ist, hinsichtlich axialer, angularer Bewegungen der Mittelachsen der beiden Dämpferkissen 12 sowie Torsionsbewegungen der Rohrstutzen 4,6 um die Rohrachse A.

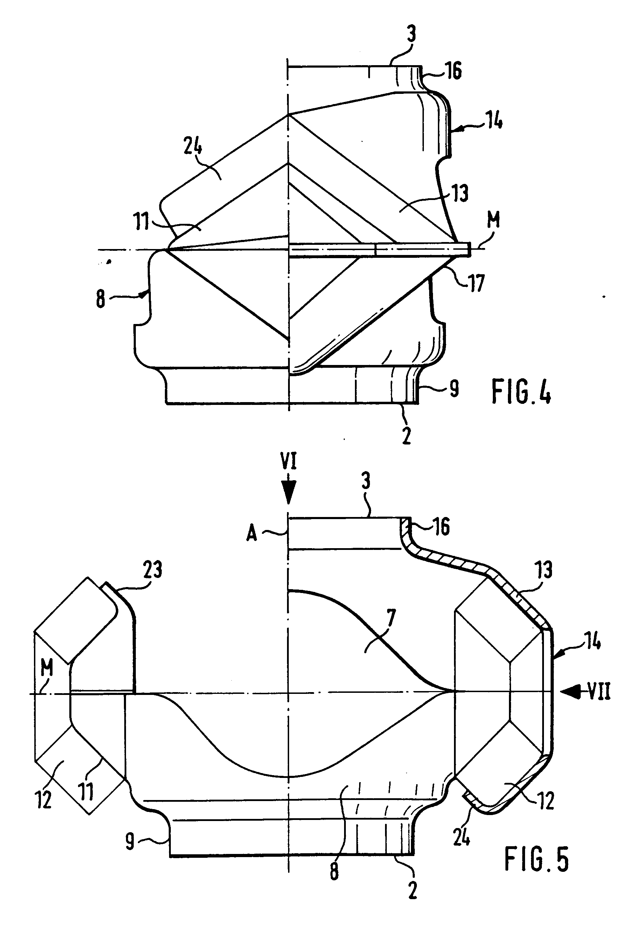

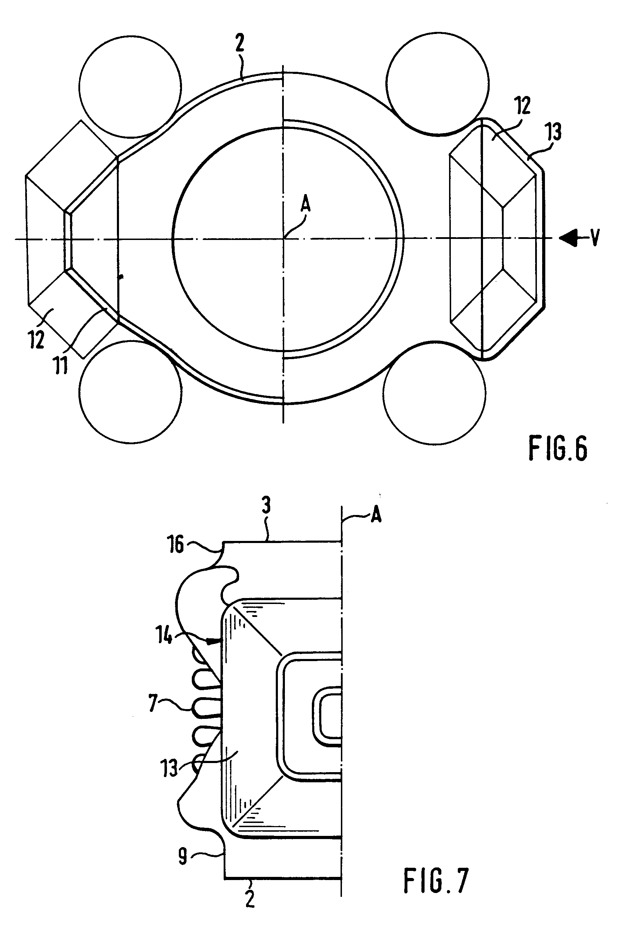

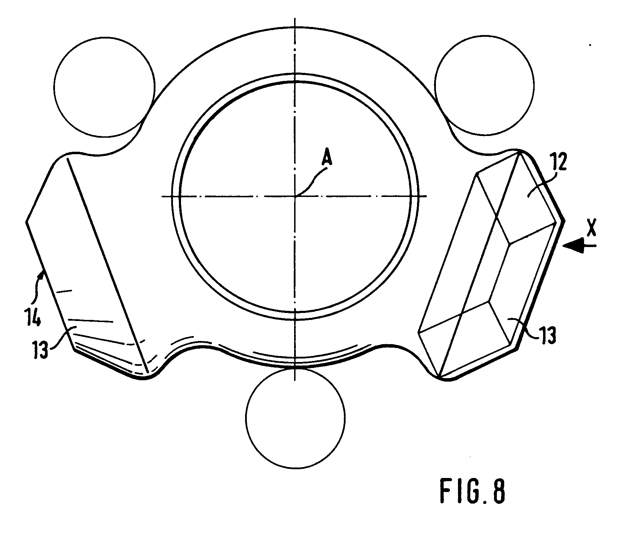

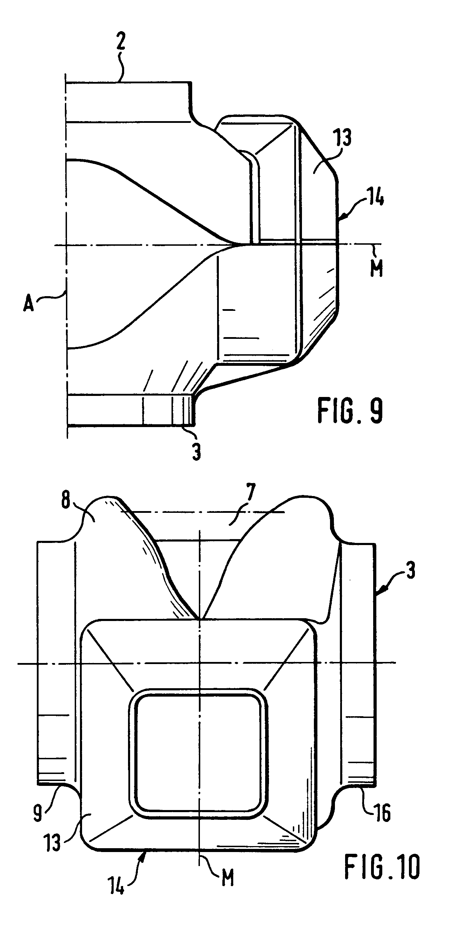

Die Ausgestaltungen der Figuren 5 bis 7 zeigen ebenfalls eine Anordnung, bei der sich die Dämpferkissen 12 diagonal zur Rohrachse A gegenüberliegen, wobei allerdings die Dämpferkissen 12 nicht diagonal angeordnet sind, sondern ihre Seitenwände bzw. -kanten parallel bzw. senkrecht zur Rohrachse A ausgerichtet sind. Bei den Ausgestaltungen der Fig.8 bis 10 sind die Dämpferkissen 12 in gleicher Weise wie bei der Ausgestaltung der Fig. 5 bis 7 ausgerichtet, stehen sich aber nicht mehr diagonal gegenüber, sondern sind um die Rohrachse A der Anordnung um einen gewissen Winkel versetzt, so daß sie bei der dargestellten Ausführungsform beispielsweise zur Rohrachse A einen Relativwinkel von 135 Grad einschließen.

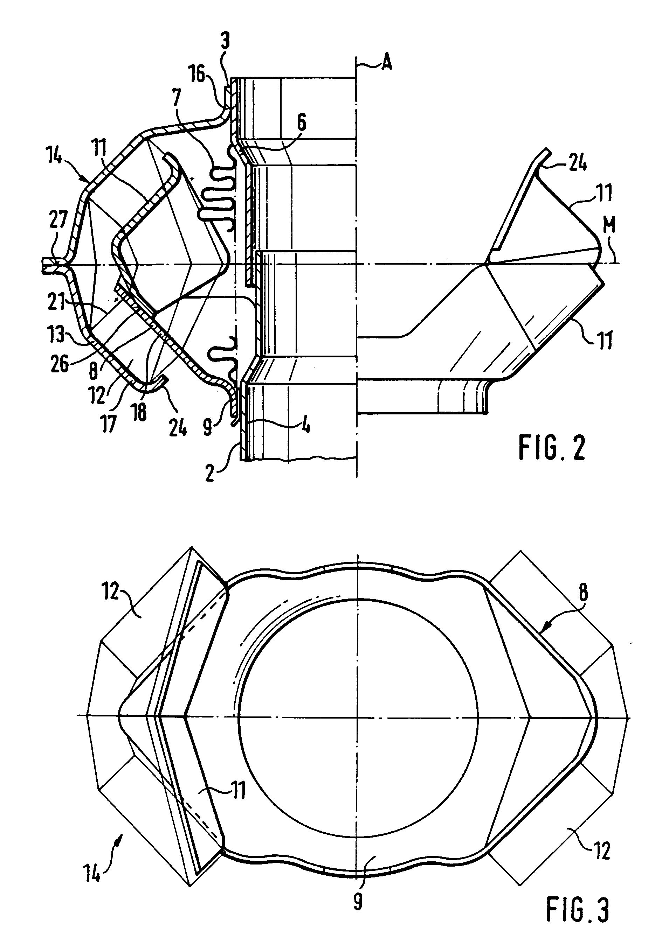

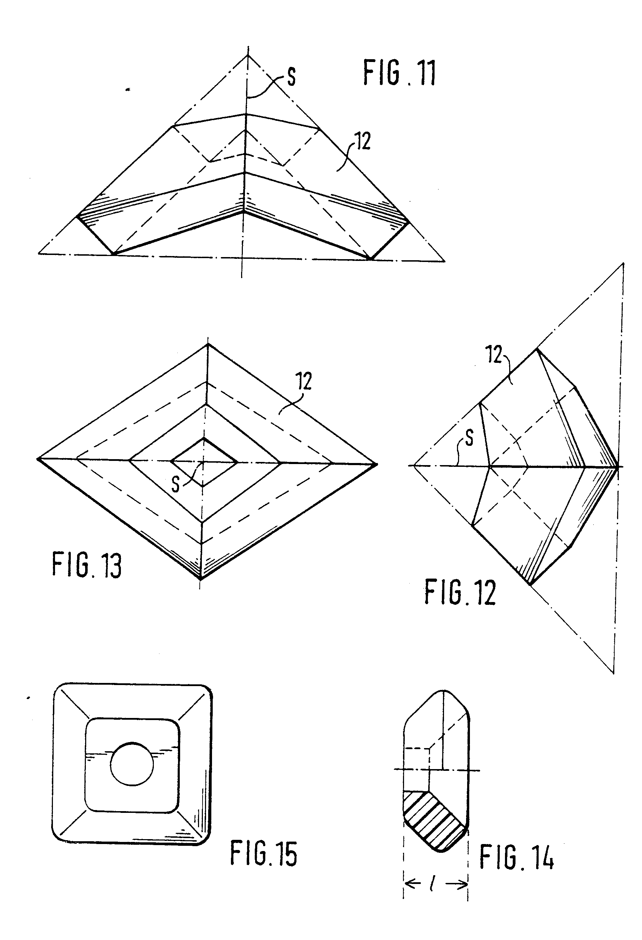

Die Figuren 11 bis 13 zeigen senkrechte Seitenansichten bzw. eine Aufsicht von oben auf eine bevorzugte Ausführungsform eines Dämpferkissens 12, wie es beispielsweise bei der Ausgestaltung der Fig. 1 bis 4 eingesetzt ist. Hilfslinien sind strichpunktiert dargestellt, während an sich verdeckte Begrenzungslinien des Dämpferkissens 12 unterbrochen dargestellt sind. Es ist ersichtlich, daß die Grundform des Dämpferkissens 12 die einer Pyramide oder eines Pyramidenmantels ist, wenn auch nicht (Fig.13) mit quadratischer, sondern rautenförmiger Grundfläche. Weiterhin ist erkennbar, daß die Ecken des Dämpferkissens 12 (in denen jeweils drei Kanten zusammenlaufen) nicht sämtlich in einer Ebene senkrecht zur Symmetrieachse S des Kissens liegen, sondern jeweils zur Symmetrieachse S diagonale Ecken in einer Ebene liegen, aber gegeneinander in Richtung der Symmetrieachse S versetzt sind. Hierdurch kann eine Anpassung an die zylindermantelförmige Außenkontur der Vorrichtung 1 und insbesondere des Balgs 7 erzielt werden, wie dies auch aus der Fig. 1 ersichtlich ist. Grundsätzlich kann das Kissen verschiedenartige Formen aufweisen, wobei es aber wesentlich ist, daß eine beliebige Schnittfläche mindestens drei Ecken und vorzugsweise bis zu sechs, höchst vorzugsweise jeweils vier Ecken aufweist und nicht eine ringförmige, kreisförmige oder auch elliptische Kontur hat, wie dies bei Zylindern, Zylindermänteln, einem Konus oder dergleichen regelmäßig der Fall ist, die umfangsmäßig oder tangential angreifende Kräfte regelmäßig nicht aufnehmen und daher nicht dämpfen können.

Obwohl vorstehend die Erfindung am Beispiel einer Rohr-Rohr-Verbindung erläutert wurde, ist sie genausogut als Flansch-Rohr- oder als Flansch-Flansch-Verbindung auszugestalten.

## Patentansprüche

1. Vorrichtung zur schwingungstechnischen Entkopplung zweier Rohrteile, insbesondere einer gasdichten Metallbalgentkopplung zwischen einem Abgasrohr eines Kraftfahrzeugmotors und der Abgasanlage, mit mindestens einem aus Drahtgeflecht, -gestricke, -wirrlage oder dergleichen verpreßten Dämpferkissen (12), dadurch gekennzeichnet, daß das Dämpferkissen (12) mit mehreckiger Außen- und Innenkontur ausgebildet ist.

2. Vorrichtung nach Anspruch 1, dadurch gekennzeichnet, daß das Dämpferkissen (12) eine zwei- bis sechseckige Grundebene aufweist.

3. Vorrichtung nach Anspruch 2, dadurch gekennzeichnet, daß das Dämpferkissen (12) eine viereckige Grundebene aufweist.

4. Vorrichtung nach Anspruch 3, dadurch gekennzeichnet, daß das Dämpferkissen (12) grundsätzlich quaderförmige Außenkontur aufweist.

5. Vorrichtung nach einem der Ansprüche 1 bis 3, dadurch gekennzeichnet, daß das Dämpferkissen (12) pyramidenstumpfartige Außenkontur aufweist.

6. Vorrichtung nach Anspruch 5, dadurch gekennzeichnet, daß die Winkel zwischen Grundfläche und Pyramidenstumpfkanten zwischen 25° und 65°, vorzugsweise bei 45° liegen.

7. Vorrichtung nach einem der vorangehenden Ansprüche, dadurch gekennzeichnet, daß ein die Dämpferkissen (12) aufnehmendes Gehäuse durch eine an die Außenkontur des Dämpferkissens (12) angepaßte, mit einem Rohrende (3) verbundene Dämpferaußenfassung (13) und durch eine an die Innenkontur des Dämpferkissens (12) angepaßte, mit dem anderen Rohrende (2) verbundene Dämpferinnenfassung (11) gebildet ist.

8. Vorrichtung nach einem der vorangehenden Ansprüche, dadurch gekennzeichnet, daß das Dämpferkissen (12) unter Vorspannung in seinem Gehäuse (11,13) einsitzt.

9. Vorrichtung nach Anspruch 7, dadurch gekennzeichnet, daß Dämpferaußen- und -innenfassung (13,11) schalenartig ausgebildet sind.

10. Vorrichtung nach einem der vorangehenden Ansprüche, dadurch gekennzeichnet, daß die Dämpferkissen (12) mit ihren äußeren Seitenkanten parallel zur Symmetrieachse der Rohrenden (2,3) in unbelastetem Zustand angeordnet sind.

11. Vorrichtung nach einem der Ansprüche 1 bis 9, dadurch gekennzeichnet, daß die Dämpferkissen (12) mit zur Achse A der Rohrenden (2,3) paralleler Diagonale der äußeren Seitenkanten ausgerichtet sind.

12. Vorrichtung nach einem der Ansprüche 6 bis 11, dadurch gekennzeichnet, daß die Innenkontur unparallel zur Außenkontur verläuft.

13. Vorrichtung nach Anspruch 12, dadurch gekennzeichnet, daß Außen- oder Innenkontur rechteckig und die andere prismenförmig ist.

14. Vorrichtung nach einem der Ansprüche 6 bis 11, dadurch gekennzeichnet, daß die Innenkontur parallel zur Außenkontur verläuft.

15. Vorrichtung nach einem der vorangehenden Ansprüche, dadurch gekennzeichnet, daß die Wirkflächen in X-, Y- und Z-Richtung gleich sind.

16. Vorrichtung nach einem der vorangehenden Ansprüche, dadurch gekennzeichnet, daß die Projektionen der Wirkflächen in X-, Y- und Z-Richtung gleich sind.

17. Vorrichtung nach einem der vorangehenden Ansprüche, dadurch gekennzeichnet, daß die Balgaußenkontur tonnenförmig ist.

## Claims

1. Device for the vibration decoupling of two pipe parts, particularly a gas-tight metal bellows decoupling between an exhaust pipe of a motor vehicle engine and the exhaust system, with at least one shock absorber cushion (12) pressed from a wire gauze, knitted piece, tangled layer or the like, characterized in that the shock absorber cushion (12) is constructed with a polygonal inner and outer contour.

2. Device according to claim 1, characterized in that the shock absorber cushion (12) has a two to six-angled base plane.

3. Device according to claim 2, characterized in that the shock absorber cushion (12) has a rectangular base plane.

4. Device according to claim 3, characterized in that the shock absorber cushion (12) has a basically parallelepipedic outer contour.

5. Device according to one of the claims 1 to 3, characterized in that the shock absorber cushion (12) has a frustum-shaped outer contour.

6. Device according to claim 5, characterized in that the angles between the base surface and the frustum edges are between 25 and 65° and preferably at 45°.

7. Device according to one of the preceding claims, characterized in that a casing receiving the shock absorber cushion (12) is formed by a shock absorber outer holder (13) connected to one pipe (3) and adapted to the outer contour of the shock absorber cushion (12) and a shock absorber inner bolder (11) connected to the other pipe end (2) and adapted to the inner contour of the shock absorber cushion (12).

8. Device according to one of the preceding claims, characterized in that the shock absorber cushion (12) is inserted under pretension in its casing (11, 13).

9. Device according to claim 7, characterized in that the shock absorber inner and outer holders (11, 13) have a tray-like construction.

10. Device according to one of the preceding claims, characterized in that the outer lateral edges of the shock absorber cushions (12) are positioned parallel to the axis of symmetry of the pipe ends (2, 3) in the unloaded state.

11. Device according to one of the claims 1 to 9, characterized in that the shock absorber cushions (12) are oriented with outer lateral edge diagonals parallel to the axis A of the pipe ends (2, 3).

12. Device according to one of the claims 6 to 11, characterized in that the inner contour is not parallel to the outer contour.

13. Device according to claim 12, characterized in that the outer or inner contour is rectangular and the other is prismatic.

14. Device according to one of the claims 6 to 11, characterized in that the inner contour is parallel to the outer contour.

15. Device according to one of the preceding claims, characterized in that the active surfaces in the X, Y and Z-direction are identical.

16. Device according to one of the preceding claims, characterized in that the projections of the active surfaces in the X, Y and Z-direction are identical.

17. Device according to one of the preceding claims, characterized in that the bellows outer contour is barrel-shaped.

## Revendications

1. Dispositif pour le désaccouplement vibratoire de deux tuyaux, en particulier le désaccouplement par manchon métallique étanche aux gaz entre un tuyau d'échappement d'un moteur de véhicule et l'ensemble d'échappement, comprenant au moins un coussin d'amortissement (12) compressé à partir d'un treillis d'un fil simple, croisé, mêlé ou analogue, caractérisé en ce que le coussin d'amortissement (12) est conformé selon un contour intérieur et extérieur polygonal.

2. Dispositif selon la revendication 1, caractérisé en ce que le coussin d'amortissement (12) présente une surface de base comportant de 2 à 6 angles.

3. Dispositif selon la revendication 2, caractérisé en ce que le coussin d'amortissement (12) présente une surface de base quadrangulaire.

4. Dispositif selon la revendication 3, caractérisé en ce que le coussin d'amortissement (12) présente un contour extérieur de forme générale parallélépipédique.

5. Dispositif selon l'une des revendications 1 à 3, caractérisé en ce que le coussin d'amortissement (12) présente un contour extérieur en forme de pyramide tronquée.

6. Dispositif selon la revendication 5, caractérisé en ce que les angles entre la surface de base et les arêtes de la pyramide tronquée se situent entre 25° et 65°, et de préférence proches de 45°.

7. Dispositif selon l'une des revendications précédentes, caractérisé en ce qu'un logement de réception des coussins d'amortissement (12) est constitué par un bulbe extérieur de recouvrement d'amortissement (13) adapté au contour extérieur du coussin d'amortissement (12) et relié à une extrémité de tuyau (3), et par un bulbe intérieur de recouvrement d'amortissement (11) adapté au contour intérieur du coussin d'amortissement (12) et relié à l'autre extrémité de tuyau (2).

8. Dispositif selon l'une des revendications précédentes, caractérisé en ce que le coussin d'amortissement (12) est placé dans son logement (11, 13) avec précontrainte.

9. Dispositif selon la revendication 7, caractérisé en ce que les bulbes intérieur et extérieur de recouvrement d'amortissement (13,11) sont conformés en coques.

10. Dispositif selon l'une des revendications précédentes, caractérisé en ce que les coussins d'amortissement (12) sont disposés de telle façon que leurs arêtes latérales extérieures soient parallèles à l'axe de symétrie des extrémités de tuyau (2, 3) à l'état non chargé.

11. Dispositif selon l'une des revendications 1 à 9, caractérisé en ce que les coussins d'amortissement (12) sont dirigés suivant une diagonale des arêtes latérales extérieures parallèle à l'axe A des extrémités (2,3) du tuyau.

12. Dispositif selon l'une des revendications 6 à 11, caractérisé en ce que le contour intérieur est conformé de façon non parallèle au contour extérieur.

13. Dispositif selon la revendication 12, caractérisé en ce que l'un des contours intérieur ou extérieur est rectangulaire et l'autre en forme de prisme.

14. Dispositif selon l'une des revendications 6 à 11, caractérisé en ce que le contour intérieur est conformé de façon parallèle au contour extérieur.

15. Dispositif selon l'une des revendications précédentes, caractérisé en ce que les surfaces actives dans les directions X, Y et Z sont identiques.

16. Dispositif selon l'une des revendications précédentes, caractérisé en ce que les projections des surfaces actives dans les directions X, Y et Z sont identiques.

17. Dispositif selon l'une des revendications précédentes, caractérisé en ce que le contour extérieur du manchon affecte la forme d'un barillet.
